(19) Europäisches Patentamt / European Patent Office / Office européen des brevets

(11) **EP 2 938 048 A1**

(12) **EUROPEAN PATENT APPLICATION**

(43) Date of publication:
28.10.2015 Bulletin 2015/44

(51) Int Cl.:
*H04L 29/08* (2006.01)     *G06Q 20/32* (2012.01)
*G06Q 20/38* (2012.01)     *G06Q 30/02* (2012.01)

(21) Application number: 15001190.6

(22) Date of filing: 22.04.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 22.04.2014  IL 23218014

(71) Applicant: **Deutsche Telekom AG**
**53113 Bonn (DE)**

(72) Inventors:
• **Katz, Gilad**
**Rehovot (IL)**
• **Shabtai, Asaf**
**Ness Ziona (IL)**
• **Ketabdar, Hamed**
**10555 Berlin (DE)**
• **Prohl, Matthias**
**50674 Köln (DE)**

(74) Representative: **Graf von Stosch, Andreas et al**
**Graf von Stosch**
**Patentanwaltsgesellschaft mbH**
**Prinzregentenstrasse 22**
**80538 München (DE)**

(54) **COUPON RECOMMENDATION FOR MOBILE DEVICES**

(57)     The present invention is a method for recommending coupons to consumers. The method is mainly designed to be carried out using the infrastructure of mobile communication networks, e.g. internet and cellular networks, and to deliver the coupons directly to the mobile devices of consumers. The method of the invention is a promotion framework that is designed to allow a service provider to propose to different businesses the option of promoting their business by offering coupons/discounts/offers to their potential customers. The goal of the method is to maximize consumption of the coupons/discounts/offers while minimizing the cost to the businesses offering the coupons.

Fig. 2

EP 2 938 048 A1

**Description**

**Field of the Invention**

The invention is from the fields of marketing and mobile communication. Specifically the invention is a method that utilizes the capabilities of mobile communication networks and devices to provide businesses with the ability to supply coupons to potential customers in a cost effective manner.

**Background of the Invention**

A coupon is a document provided by a retailer, manufacturer, or service provider to potential customers that can be exchanged for a discount when purchasing a product or service. The purpose of the coupon is to attract price conscious consumers to buy specific products and/or to attract new customers. Originally coupons were printed in newspapers, magazines, or on the packaging of goods and the customer would cut them out and take them to the retail store/s specified on the coupon to be redeemed. In recent years with the development of the internet, and more recently mobile communication services, coupons are more and more being distributed in electronic form.

Smart mobile devices, being small computers that are always connected to the internet and carried by consumers, are increasingly being used for context-based recommendation. Existing applications for mobile devices push messages and coupons to the device owner mainly based on his location. However the mobile devices comprise sensors that provide mobile service providers with a great deal more information than just the location of the device holder.

It is a purpose of the present invention to allow mobile communication device service providers to make use of the information available to them to recommend to businesses coupons that can be proposed to consumers, so that overall coupon consumption is maximized in a manner that increases the revenues of the businesses participating in the program.

Further purposes and advantages of this invention will appear as the description proceeds.

**Summary of the Invention**

In a first aspect the invention is method that utilizes the capabilities of mobile communication networks and devices to provide businesses with the ability to supply coupons to potential customers in a cost effective manner. The method comprises:

> a. determining the current context of the customer and selecting the coupon having the highest utility for the current context;
> b. determining and taking into account the previous behavior of the customer and supplying zero coupons to customers that are likely to make a purchase without the incentive of a coupon;
> c. supplying coupons to potential customers that will encourage shifting customers between affiliated businesses in a way that maximizes the profit for all of the businesses; and
> d. in the case of groups, supplying coupons to the members of the group by breaking up the group into all possible sub-groups and treating the subgroups as individuals in order to determine the distribution of coupons amongst the group that will have the highest utility for the current context.

In embodiments of the method of the invention each business that wants to use the method is able to describe at least one of: (a) the size of the various discounts it is willing to offer; (b) the reward it associates with each discount; and (c) various restrictions it wants to place on the offers made to the users.

In embodiments of the method of the invention the consumer's context is derived from information gathered from various sensors on her/his smart mobile device. The method context may additionally be based on other information.

In embodiments of the method of the invention for each combination of context "x", business "$b_i$", and discount/coupon "c" the utility of offering "c" for business "$b_i$" within the context "x" is calculated from

$$Utility = \frac{C_i(n)}{T_i(n)}r_i + \sqrt{\frac{2 * \ln(n)}{T_i(n)}}$$

where, n = the number of iterations, $T_i(n)$ = the number of times the coupon i was offered within the context, $C_i(n)$ = the number of times the coupon i was offered and consumed within the context, and $r_i$ = the reward associated with the coupon i in the specific context.

In embodiments of the method of the invention a model is constructed following a learning period during which a given set of coupons are proposed to users in a given context several times and the model is updated each time the set of coupons is proposed to another user in the given context.

In embodiments of the method of the invention the method maximizes the profit for all of the affiliated businesses by offering zero coupons and by integrating the expected amount spent by a customer at different businesses when given a coupon of a specific amount.

Embodiments of the method of the invention for recommending coupons to an individual comprise the steps:

- deriving the user's context from data collected from the sensors on the user's mobile device and combining this with other data in a database;
- generating a set of possible coupons to offer the user on the basis of the context;
- calculating the utility for each coupon;
- offering the X coupons that have the highest utility to the user via his/her mobile device;
- waiting a predetermined time to see if any of the offered coupons are consumed or if they have expired after a predetermined time;
- updating the coupon information in the relevant context depending on the result of the previous step.

Embodiments of the method of the invention for recommending coupons to a group of users comprise the steps:

- entering data for the group;
- generating all possible sub-group variations;
- deriving the context for each sub-group;
- generating a set of possible coupons to be offered to the members of each sub-group;
- determining the utility of each of the coupons generated in the previous step;
- determining the optimal sub-group allocation from the utilities determined for all of the sub-groups in the previous step;
- offering the top X coupons to the members of the group according to the results of the previous step;
- waiting a predetermined time to see if any of the offered coupons are consumed or if they have expired after a predetermined time;
- updating the coupon information in the relevant context depending on the result of the previous step.

In a second aspect the invention is a system for executing the method of the first aspect. The system comprises:

- a mobile communication device service provider' network;
- an application running on a user's mobile communication device, the application adapted for collecting and sending data gathered from sensors on the device and interacting with the user showing him coupons recommended by the system;
- a database that contains all user data;
- an analytics services module that is adapted to derive high level useful information from the sensor data and from data sources that are external to the system; and
- a recommendation algorithm module adapted to execute the actual logic of the method of claim 1 including processing information derived by the analytics services module, selecting the best offer for the specific customer in the specific context, and updating the recommendation model based on previous offers and consumptions.

All the above and other characteristics and advantages of the invention will be further understood through the following illustrative and non-limitative description of embodiments thereof, with reference to the appended drawings.

## Brief Description of the Drawings

- Fig. 1 schematically shows the main components of the system that executes the method of the invention;
- Fig. 2 is a flow chart showing the main steps of the general process for recommending coupons to an individual user according to the method of the invention;
- Fig. 3 is a flow chart showing the main steps of the general process for ranking coupons according to the method of the invention; and
- Fig. 4 is a flow chart showing the main steps of the general process for recommending coupons to a group of users according to the method of the invention.

**Detailed Description of Embodiments of the Invention**

The present invention is a method for recommending coupons to consumers. The method is mainly designed to be carried out using the infrastructure of mobile communication networks, e.g. internet and cellular networks, and to deliver the coupons directly to the mobile devices of consumers; however the method can also be adapted to be used with other technologies and coupon delivery methods.

The method of the invention is a promotion framework that is designed to allow a service provider to propose to different businesses the option of promoting their business by offering coupons/discounts/offers to their potential customers. The goal of the method is to maximize consumption of the coupons/discounts/offers while minimizing the cost to the businesses offering the coupons. In other words, the method of the invention aims to propose to a potential customer the minimal discount (cost-wise) that would motivate him to commit to a transaction he would not have committed to had he not been offered the discount.

The invention is a service residing in the cloud. By installing the service's software, i.e. app, on their mobile devices, users will receive coupons to various businesses affiliated with the service. The app will transmit various data regarding the user, including (but not limited to) location, degree of activity, data usage, location of friends etc. In addition to this data, the users will also be asked to provide additional data about themselves and the preferences through the use of questionnaires.

The service will offer various businesses the ability to "opt in". When joining the service, each business will describe the size of the various discounts it is willing to offer and the "reward" (to itself) it associates with each discount (it is logical to assume that greater discounts will bring smaller rewards), as well the rewards associated with additional scenarios - for example the acquisition of new customers. In addition, various restrictions can be places on the offers made to the users based on sex, age, predefined preferences by the users etc.

This method of the invention achieves its goal by providing context-based recommendations. The system that is responsible for making the recommendations determines the current context of the consumer and selects the right offer for the current context. The method is designed mainly for smart mobile devices; but it can also be used on other platforms, using different sets of context parameters. The method derives the consumer's context from information gathered from various sensors on her/his smart mobile device. Such information includes, for example, current location, number and frequency of social messages (SMS, Whatsup, etc.), applications used, and current activity (speaking, texting, working, attending a sporting event, etc.).

The context can also be based on other information, such as credit card purchases and combined with sensor information collected over time from the mobile device. For example, daily records of location vs. time for consumer X show that she/he runs, either for exercise or in training for an athletic event nearly every day. It is known that people doing sports change running shows every six months and that consumer X purchased a pair of running shoes six months ago. Based on this information, the next time that consumer X is in the vicinity during business hours of a store that sells running shoes and has subscribed to the coupon service of the mobile communication service provider consumer X will receive via their mobile device an offer to buy new sports shoes at a discount at the nearby store. Another example is consumer Y. Based on the location, time, movement activity, light and sound sensors, and close presence of nearby devices that indicate that she/he is with friends, it is concluded that consumer Y has just left a bar. Under these circumstances consumer Y could be offered a coupon that might induce her/him to stop to buy food at a nearby restaurant.

The system that executes the method of the invention comprises: (1) a mobile device application that collects sensor data. e.g., location, time, installed/running apps, light sensor, sound sensor, activity sensor, communication, from the consumers device and interacts with the user by offering him discounts/coupons; and (2) a server side that collects the sensor data, derive the context out of this data and runs the recommendation algorithm. The server also includes a component that is responsible for updating the recommendation algorithm.

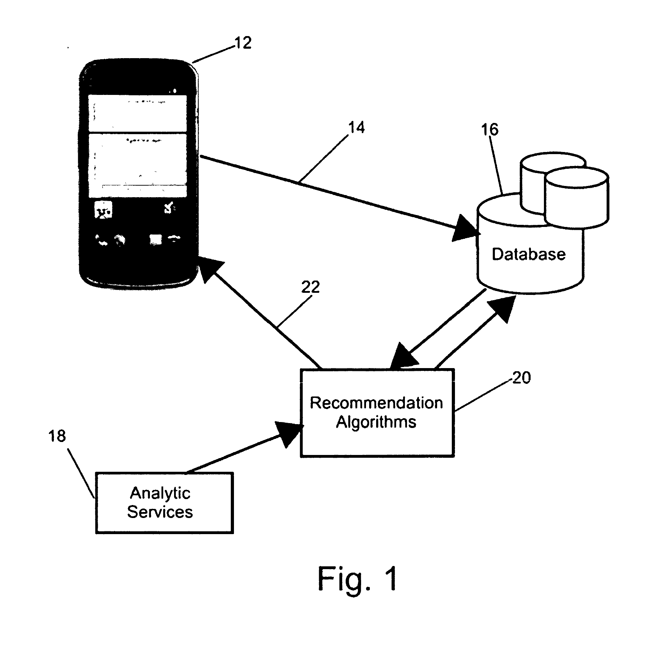

Fig. 1 schematically shows the main components of the system that executes the method of the invention. These components are:

-    An application running on a user's mobile communication device 12. The application is responsible for collecting and sending sensor data and also interacts with the user showing him coupons recommended by the system.
-    Sensor data 14 sent from mobile device 12 to the system data base 16.
-    A database 16 that contains all user data including, for example, sensor information, coupons offered and coupons consumed.
-    An analytics services module 18, which is a component that is responsible for deriving high level useful information from the sensor data. For example, based on the analysis of the data collected for a duration of one month from the activity sensor, which indicates the level of activity and direction of travel of the mobile phone, this component can derive with a high level of certainty that the user owns a car. The analytics services module also includes data sources that are external to the system, e.g., current whether from an external web site and Facebook.
-    A recommendation algorithm module 20, which executes the actual logic that is the subject matter of the present invention. The input to this module includes the information derived by the analytics services module 18. The recommendation algorithm module 20 processes the information and selects the best offer 22 for the specific customer. This module is also responsible of updating the recommendation model based on previous offers and consumptions.

The recommendation method of the invention contains three innovations. While the framework in which the method operates is based on well-known probabilistic methods, this invention presents solutions to several important problems that up until now have been unaddressed by existing algorithms for the purpose of proposing discounts and deals. These issues are:

1) Incentivizing existing behavior - The goal of every advertising campaign is to invest resources in those who, without an additional incentive, will not purchase the product while investing as little as possible in existing or highly likely customers. Existing customers, for example, are those that have preexisting purchasing patterns and habits. While these habits are often easy to detect and predict, they pose a problem for existing recommendation systems. The problem is that since the user is already likely to make a purchase in a specific establishment, the system will be inclined to offer a coupon or a discount for that location, because it is a likely and easy "win". This of course will result in lost revenue for the business, because of the money that was spent on the needless discount. While it is easy to define various "rules of thumb" for dealing with this problem, the present invention presents a solution that can be smoothly integrated into an existing recommendation system and can model the probability (and utility) of that a user will make a purchase without being offered an additional incentive.

2) Maximizing the overall profit for all participating businesses - An important (and currently unaddressed) problem for coupon recommendation systems is the issue of customer cannibalization, i.e. shifting customers between affiliated businesses (that is, businesses selling related products or providing related services) that have signed on to the recommendation platform, are assigned a "budget" for coupons and expect to see an increase in revenue, new customer turnout etc. without increasing the overall revenue. For example, a user that was planning on going to restaurant A and spend 20$ there may be given a 5$ coupon for restaurant B, may accept the coupon and spend the same amount of money in restaurant B. Both restaurants are members in an advertising campaign, and the ultimate results of the action of offering the coupon is a 5$ loss. In order to maintain the faith of business partners and increase overall revenue, this issue needs to be addressed.

3) Group recommendation - The discovery of groups in human social relationships is a well-explored problem to which various solutions have been proposed. Geographic co-occurrence and the analysis of information from social networks are well-known and effective measures for the generation of such groups.

Current solutions for group recommendation are focused on finding the "lowest common denominator", i.e. items that cause the smallest amount of irritation to users in a group. The present invention focuses on measures designed to maximize profit from a group of potential users and its inner dynamics instead of pleasing (or not irritating) the largest number of group members. This is achieved by not only searching for the optimal solution for the group but by also looking at sub-groups and assessing the possibility of "breaking up" the group (when needed) in order to maximize the profit for the service provider and/or the retailers who are "signed on" to the recommendation platform. For example, if a group of four people has two lovers of Chinese food and two who dislike it, the system may offer a Chinese restaurant coupon for the first pair while trying to send the other two members to an Italian restaurant. The probabilistic and context dependent method of the invention is enabled to determine the chances of success for each strategy and over the long run maximize the rewards for the recommendation service provider and the retailers affiliated with the recommendation platform.

The novelty of the method of the invention lies in its attempting to actively modify the social dynamics of the group instead of simply trying to make the most of an existing situation.

1. <u>Method</u>

The overall recommendation method of the invention is now described.
Let,
$B = \{b_1, b_2, ..., b_k\}$ - the set of businesses that offers coupons and discounts to the consumers.
$c$ = a coupon offered by business $b_i$.
$x$ = the current observed context of the consumer. Herein a context may consist of multiple elements such as gender, age, location, predicted location, activity (driving, walking, running), applications installed on the consumer's mobile device and more.

The method is probabilistic. That is for various businesses and discount sizes, the method calculates the probability of the user redeeming a coupon c at a business $b_i$ within a context x. For each business, the smaller the size of the discount, the greater the "reward" gained by the business if the consumer uses the coupon. Different rewards scales may be defined for different businesses, based on each business' interests and also those of the service provider. For example, a new business may put greater emphasis on getting people through the door (thus defining a higher utility for coupons with larger discounts) than an established business.

Each user is represented in the system by a set of attributes called "user properties". Users are also grouped together based on these attributes, in order to increase the available information on every "user type".

In addition to the user attributes, whenever the system is evaluating the merit of making a recommendation to the user, the context of that user is calculated. The context includes many features, including time of day, day of week, distance from the business which the system is considering to recommend, age, gender, predicted location, activity (driving, walking, running), applications installed on the device and so-forth. The context plays a major part in the recommendation system's decision making process.

Recommending coupons can be modeled as an exploration/exploitation problem. In the context of the invention "exploration" means offering new items to users in the hope of discovering new and better items to recommend and "exploitation" refers to the need to "monetize" what is already known. The algorithm automatically alternates between exploration and exploitation.

For each combination of context x, business $b_i$, and discount/coupon c ($<x, b_i, c>$) the utility of offering c for business $b_i$ within the context x is calculated. Given the current context of a user, the discount/coupon of the business which provides the highest utility is selected. In order to choose the next offer/discount to choose, the following formula is used:

$$Utility = \frac{C_i(n)}{T_i(n)} r_i + \sqrt{\frac{2*\ln(n)}{T_i(n)}} \qquad \text{Equation 1}$$

Where,

n = the number of iterations - In other words this is the number of offers that the algorithm has made to users.

$T_i(n)$ = the number of times the coupon i was offered within the context. That is, given both the attributes of the user (e.g. age, activity level, location etc.) and the environment (e.g. day of week, hour, temperature), how many times was the specific coupon offered under these circumstances.

$C_i(n)$ = the number of times the coupon i was offered *and consumed* within the context. That is, given both the attributes of the user (e.g. age, activity level, location etc.) and the environment (e.g. day of week, hour, temperature), how many times was the specific coupon both offered and consumed by the user under these circumstances.

$r_i$ = the reward associated with the coupon i in the specific context. The reward may depend on a variety of factors, including (but not limited to) the size of the discount, the overall amount of money the user is likely to spend when using the coupon, whether or not the user has been to the business before, the day of the week etc.

Following a learning period, the method "exploits" the existing model most of the time. The more information that has been gathered on a coupon, the less the method "explores".

The algorithm offers a solid theoretical base since over time it can be ascertained that there are excellent bounds on probability. More advanced bounds can be easily adapted if needed.

For example,

- assume a user u - 23 years old, who doesn't have a car, is currently at work
- Based on this context, there are 3 possible recommendations for a place for u to eat lunch:

  - Place A - 300m away, medium-cheap restaurant, discount size: 10NIS. The reward assigned to this coupon (based on the size of the discount) is 0.5.
  - Place B - 650m away, cheap restaurant, discount size: 5NIS. The reward assigned to this coupon (based on the size of the discount) is 0.7.
  - Place C - 300m away, expensive restaurant, discount size: 15NIS. The reward assigned to this coupon (based on the size of the discount) is 0.3.

Using these recommendations a scenario is presented where the coupons that were described above have already been proposed several times. The coupon for restaurant A has been proposed 3 times to users and consumed (that is, the user to whom the coupon was offered chose to use it) once. The coupons of restaurants B and C have been each proposed twice and used zero and two times respectively.

$$A \qquad\qquad B \qquad\qquad C$$

Tested: 3 times  Tested : 2 times  Tested : 2 times
Coupons Used: 1 time  Coupons Used : 0 time  Coupons Used : 2 times
Reward: 0.5  Reward: 0.7  Reward: 0.3

$$U = \frac{1}{3} * 0.5 + \sqrt{\frac{2\cdot\ln(7)}{3}} = 1.305 \qquad U = 0 * 0.7 + \sqrt{\frac{2\cdot\ln(7)}{2}} = 1.394 \qquad U = \frac{2}{2} * 0.3 + \sqrt{\frac{2\cdot\ln(7)}{2}} = \mathbf{1.694}$$

For each restaurant the "score" calculated for its coupon in the current iteration is presented. As the score assigned with the coupon belonging to restaurant C is highest, this is the one that will be chosen and shown to the user, who chooses not to accept the offer.

Based on this offer, the model is now updated as follows:

$$A \qquad\qquad B \qquad\qquad C$$

Tested: 3 times  Tested : 2 times  Tested : 3 times
Coupons Used: 1 time  Coupons Used : 0 time  Coupons Used : 2 times
Reward: 0.5  Reward: 0.7  Reward: 0.3

$$U = \frac{1}{3} * 0.5 + \sqrt{\frac{2\cdot\ln(8)}{3}} = 1.34 \qquad U = 0 * 0.7 + \sqrt{\frac{2\cdot\ln(8)}{2}} = \mathbf{1.255} \qquad U = \frac{2}{3} * 0.3 + \sqrt{\frac{2\cdot\ln(8)}{3}} = 1.2387$$

On the basis of the updated model, the next time that the system is called upon to offer a coupon for the same combination <x, b$_i$, c>, coupon A will be selected.

2. Incentivizing Existing Behavior

When offering discounts to potential customers, there is great interest in only targeting users who would not otherwise purchase the offered product. However, it is not a trivial matter to incorporate this notion into a probabilistic framework (such as that of k-arm bandits). While it is possible to calculate some probability of the user visiting a certain business, integrating this probability into the algorithm's value function is more difficult. The reason for this is the need to assign values to the probabilities of the user purchasing at the business without the offer of a coupon (and the value the recommender system assigns to this scenario) and to the possibility of the user purchasing when a coupon offer was made. The solution applied by the method of the invention integrates the two scenarios seamlessly and enables the scenario of "zero discount" to be simply another scenario.

The solution of the invention is the following: in addition to all the "regular" coupons offered by the system, a "zero coupon", i.e. a discount of a miniscule (or zero) amount is also included. This type coupons is integrated into the system in the same way as ordinary coupons, but since its possible "use" by the user is of no cost to either the business or the coupon service provider its "reward" is greater than that of other coupons for that business.

Since these "zero coupons" can be represented as an integral part of the recommendation framework, there is no overhead whatsoever in their deployment. In cases where the user is very likely to make a purchase without the incentive of a discount, "zero coupons" will be chosen instead of coupons with a larger discount. The only difference between these coupons and the others is that in case they are chosen, they will not be presented to the user. However, if the user does make a purchase in the business, the usage probabilities of this coupon are updated in the same manner as all other coupons.

3. Making Recommendations to Groups

As mentioned above, existing group recommendation algorithms focus on items that are most agreeable to the group as a whole. These solutions strive to make the group "happy" as a whole and avoid cases in which some elements of the group are highly displeased. This invention aims to shift the focus of group recommendation algorithms from overall satisfaction to profit maximization.

For the purpose of illustrating the method, it is assumed that a group of users has already identified. The means by which the group has been identified are immaterial for this example. The goal is to find the optimal mixture of coupons/discounts that should be offered to individual members of the group in order to maximize the expected reward from their actions.

This goal is achieved by the following steps:

1) Identify all possible group combinations - for example, a group of four persons can be treated as four individuals, one group of four, two pairs and so-forth. All possible combinations are identified.

2) Model each possible group combination as a user in the system - for each of the generated group combinations, the relevant context is generated. This process is similar to that done for individual users, but it also contains features unique for the group combination, for example, the distance between members.

3) The expected profit for each group combination is calculated. In this step the expected rewards for each group combination is summed up and the one with the highest score is chosen. For example, for a group of four people the expected reward for the "user" representing the four users together is calculated and compared to a) the sum of expected individual rewards of each of the users; b) each possible combination of two pairs of users; c) every possible 3-1 (three users as a group and one user remaining alone) combination.

By using this approach, the method is able to take into account the inner dynamics of the group and predict (using sound probabilistic bounds) the optimal composition of discounts and coupons to offer to the users as a group.

4. Maximizing the Overall Profit for all Participating Businesses

Consider the following scenario: Two customers C1 and C2 are intending with a very high likelihood (as estimated by the recommendation framework) to go to businesses B1 and B2, respectively. Both businesses are members of the coupon recommendation framework, and the two customers were not offered any coupons prior to their decision.

In a scenario that does not include the use of zero coupons, it is quite possible that the recommendation framework would find it difficult to correctly model the fact that the two customers will both make an unsolicited purchase at a business affiliated with the coupons program. As a result, the two customers may each be offered a coupon to the business in which they were not intending to make a purchase. These offers, in turn, may cause each customer to go to the other business than the one originally intended. The final result of this scenario is that two coupons were offered to customers and consumed, without any overall gain either to the recommendation framework or the affiliated businesses.

The above scenario presents two intertwined problems - a "merry-go-round" of customers among affiliated businesses while spending the business' money on coupons without regard to overall profit maximization (calculated by subtracting the cost of the coupon from the money spent by the customer).

The solution to this problem provided by the present invention consists of two elements, one of which already presented above in a different context:

1) The use of "zero coupons" - by using these coupons, businesses that have no need to offer a coupon to be "competitive" with regard to a certain user are also represented in the system.

2) The addition of an "expected customer expense" component to the equation - by integrating the expected amount spent by a customer at different businesses when given a coupon or discount of a specific amount, the method is able to assign the customers in a manner that will maximize the overall profit for all businesses.

Returning to the example mentioned above: currently C1 and C2 are planning on making a purchase from B1 and B2, respectively. However, the algorithm of the method predicts that by offering each customer a 5$ coupon for the other business, the purchase amount for each customer is likely to increase by 10$. In this scenario, all business participants profit from the new user allocation.

There are numerous possibilities for integrating the expected customer expenditure in the algorithm of the invention. The simplest possibility is multiplication - multiply the expected "reward" associated with each coupon by the amount of money the customer is expected to spend. Other methods, with more advanced sets of weights, are of course also possible.

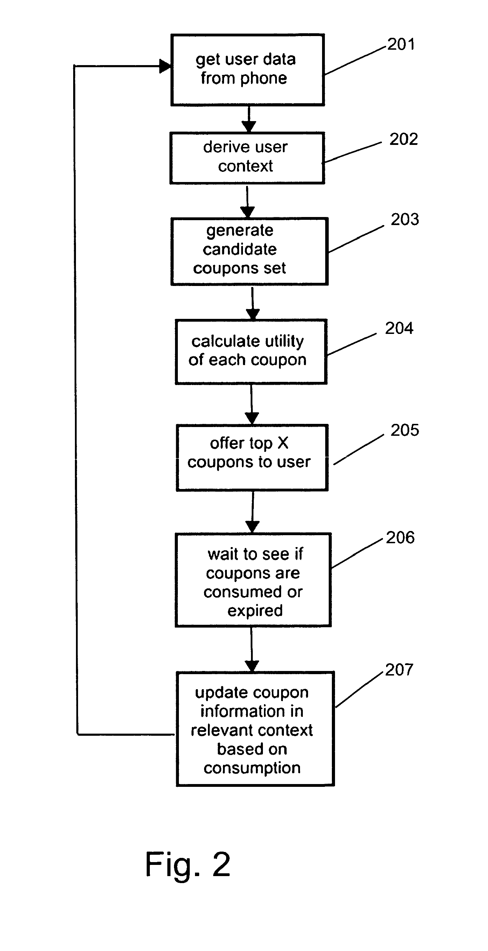

Fig. 2 is a flow chart showing the main steps of the general process for recommending coupons to an individual user according to the method of the invention.

In step 201 data is collected from the sensors on the user's mobile device and combined with other data in the system database to derive the user's context (step 202). On the basis of the context the system generates a set of possible coupons to offer the user (step 203). Using Equation 1 above the system then calculates the utility for each coupon (step 204). The X coupons that have the highest utility are then offered to the user via his/her mobile device (step 205). The system then waits a predetermined time to see if any of the offered coupons are consumed or if they have expired after a predetermined time (step 206). The system then, in step 207, updates the coupon information in the relevant context depending on the result of step 206 as demonstrated in the example herein above.

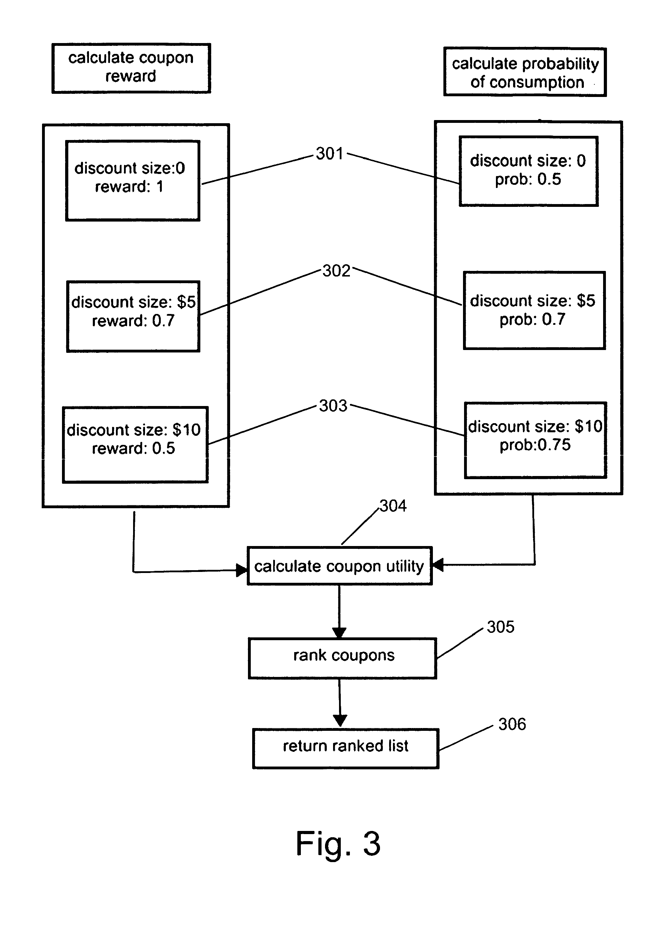

Fig. 3 is a flow chart showing the main steps of the general process for ranking coupons according to the method of the invention. Fig. 3 shows in more detail steps 203 and 204 of Fig. 2. Given the context the system considers offering three coupons to the user. Based on the size of the discount the reward for each coupon is determined. Based on factors such as the history of the user's prior behavior, e.g. is he/she a regular customer, and past history of consumption of the coupon in the same or very similar contexts the probability of consumption is determined. Using the determined rewards and probabilities 301, 302, and 303 for each of the coupons, the system uses Equation 1 to calculate the utility of each of the coupons (step 304). In step 305 the coupons are ranked in a list according to the values determined in the previous step. The ranked list is the returned to the components of the system responsible for offering coupons to the user (step 306).

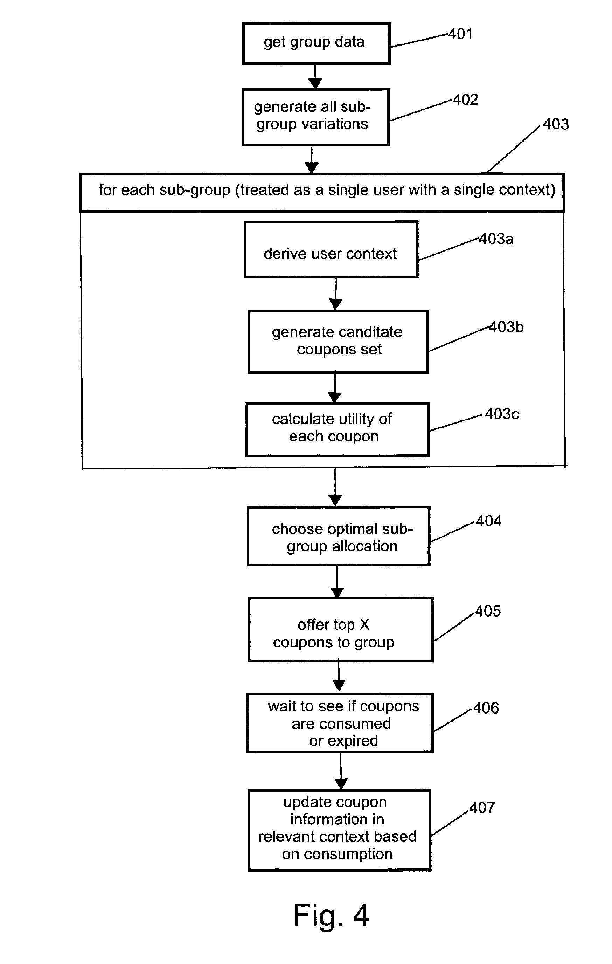

Fig. 4 is a flow chart showing the main steps of the general process for recommending coupons to a group of users according to the method of the invention. In step 401 the data for the group is entered into the system. For the purposes of describing and understanding the present invention the way in which the group is defined is not relevant and it is assumed that a group of users exists. In step 402 all possible sub-group variations are generated as described herein above. Step 403 is then carried out for each of the sub-groups generated in the previous step. Each of the sub-groups is treated as a single user within the same context. For each of the sub-groups the system derives the context (step 403a), generates a set of possible coupons to be offered to the members of the sub-group (step 403b), and (step 403c) uses Equation 1 to determine the utility of each coupons generated in step 403b. From the utilities determined for all of the sub-groups in step 403 the system determines the optimal sub-group allocation (step 404) and in step 405 offers the top X coupons to the members of the group according to the results of the previous step. Finally the system then waits a predetermined time to see if any of the offered coupons are consumed or if they have expired after a predetermined time (step 406). The system then, in step 407, updates the coupon information in the relevant context depending on the result of step 406 as demonstrated in the example herein above.

Although embodiments of the invention have been described by way of illustration, it will be understood that the invention may be carried out with many variations, modifications, and adaptations, without exceeding the scope of the claims.

## Claims

1. A method that utilizes the capabilities of mobile communication networks and devices to provide businesses with the ability to supply coupons to potential customers in a cost effective manner; wherein the method comprises:

    a. determining the current context of the customer and selecting the coupon having the highest utility for the current context;
    b. determining and taking into account the previous behavior of the customer and supplying zero coupons to customers that are likely to make a purchase without the incentive of a coupon;
    c. supplying coupons to potential customers that will encourage shifting customers between affiliated businesses in a way that maximizes the profit for all of the businesses; and
    d. in the case of groups, supplying coupons to the members of the group by breaking up the group into all possible sub-groups and treating the subgroups as individuals in order to determine the distribution of coupons amongst the group that will have the highest utility for the current context.

2. The method of claim 1, wherein each business that wants to use the method is able to describe at least one of: (a) the size of the various discounts it is willing to offer; (b) the reward it associates with each discount; and (c) various restrictions it wants to place on the offers made to the users.

3. The method of claim 1, wherein the method derives the consumer's context from information gathered from various sensors on her/his smart mobile device.

4. The method of claim 3, wherein the context is additionally based on other information.

5. The method of claim 1, wherein for each combination of context "x", business "b$_i$", and discount/coupon "c" the utility of offering "c" for business "b$_i$" within the context "x" is calculated from

$$Utility = \frac{C_i(n)}{T_i(n)} r_i + \sqrt{\frac{2 * \ln(n)}{T_i(n)}}$$

where, n = the number of iterations, $T_i(n)$ = the number of times the coupon i was offered within the context, $C_i(n)$ = the number of times the coupon i was offered and consumed within the context, and $r_i$ = the reward associated with the coupon i in the specific context.

6. The method of claim 1, wherein following a learning period during which a given set of coupons are proposed to users in a given context several times, a model is constructed, which is updated each time the set of coupons is proposed to another user in the given context.

7. The method of claim 1, wherein the method maximizes the profit for all of the affiliated businesses by offering zero coupons and by integrating the expected amount spent by a customer at different businesses when given a coupon of a specific amount.

8. The method of claim 1 for recommending coupons to an individual comprising the steps:

- deriving the user's context from data collected from the sensors on the user's mobile device and combining this with other data in a database;
- generating a set of possible coupons to offer the user on the basis of the context;
- calculating the utility for each coupon;
- offering the X coupons that have the highest utility to the user via his/her mobile device;
- waiting a predetermined time to see if any of the offered coupons are consumed or if they have expired after a predetermined time;
- updating the coupon information in the relevant context depending on the result of the previous step.

9. The method of claim 1 for recommending coupons to a group of users comprising the steps:

- entering data for the group;
- generating all possible sub-group variations;
- deriving the context for each sub-group;
- generating a set of possible coupons to be offered to the members of each sub-group;
- determining the utility of each of the coupons generated in the previous step;
- determining the optimal sub-group allocation from the utilities determined for all of the sub-groups in the previous step;
- offering the top X coupons to the members of the group according to the results of the previous step;
- waiting a predetermined time to see if any of the offered coupons are consumed or if they have expired after a predetermined time;
- updating the coupon information in the relevant context depending on the result of the previous step.

10. A system for executing the method of claim 1, the system comprising:

- a mobile communication device service provider' network;
- an application running on a user's mobile communication device, the application adapted for collecting and sending data gathered from sensors on the device and interacting with the user showing him coupons recommended by the system;
- a database that contains all user data;

- an analytics services module that is adapted to derive high level useful information from the sensor data and from data sources that are external to the system; and
- a recommendation algorithm module adapted to execute the actual logic of the method of claim 1 including processing information derived by the analytics services module, selecting the best offer for the specific customer in the specific context, and updating the recommendation model based on previous offers and consumptions.

Fig. 1

get user data
from phone — 201

derive user
context — 202

generate
candidate
coupons set — 203

calculate utility
of each coupon — 204

offer top X
coupons to user — 205

wait to see if
coupons are
consumed or
expired — 206

update coupon
information in
relevant context
based on
consumption — 207

Fig. 2

calculate coupon reward

calculate probability of consumption

discount size:0
reward: 1

301

discount size: 0
prob: 0.5

discount size: $5
reward: 0.7

302

discount size: $5
prob: 0.7

discount size: $10
reward: 0.5

303

discount size: $10
prob:0.75

304

calculate coupon utility

305

rank coupons

306

return ranked list

Fig. 3

get group data —401

↓

generate all sub-group variations —402

↓

for each sub-group (treated as a single user with a single context) —403

derive user context —403a

↓

generate canditate coupons set —403b

↓

calculate utility of each coupon —403c

↓

choose optimal sub-group allocation —404

↓

offer top X coupons to group —405

↓

wait to see if coupons are consumed or expired —406

↓

update coupon information in relevant context based on consumption —407

## Fig. 4

Europäisches
Patentamt

European
Patent Office

Office européen
des brevets

## EUROPEAN SEARCH REPORT

Application Number

EP 15 00 1190

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/290389 A1 (GREENOUGH JOSHUA M [US] ET AL) 15 November 2012 (2012-11-15) * paragraph [0007]; figures * | 1-10 | INV.<br>H04L29/08<br>G06Q20/32<br>G06Q20/38<br>G06Q30/02 |
| X | WO 2014/055376 A2 (BJONTEGARD BERNT ERIK [US]) 10 April 2014 (2014-04-10) * paragraphs [0011], [0167] - [0170]; figures 1,3-8 * | 1-10 | |
| X | WEI LIU ET AL: "A survey on context awareness", COMPUTER SCIENCE AND SERVICE SYSTEM (CSSS), 2011 INTERNATIONAL CONFERENCE ON, IEEE, 27 June 2011 (2011-06-27), pages 144-147, XP032004821, DOI: 10.1109/CSSS.2011.5972040 ISBN: 978-1-4244-9762-1 * the whole document * | 1-10 | |
| X | US 2013/246150 A1 (OVICK JOSEPH BJORN [US] ET AL) 19 September 2013 (2013-09-19) * paragraphs [0129] - [0137], [0145] - [0146]; figure 22 * | 1-10 | **TECHNICAL FIELDS SEARCHED (IPC)**<br>H04L<br>G06Q |
| X | MATTHIAS BALDAUF ET AL: "A survey on context-aware systems", INTERNATIONAL JOURNAL OF AD HOC AND UBIQUITOUS COMPUTING, INDERSCIENCE PUBLISHERS, XX, vol. 2, no. 4, 1 January 2007 (2007-01-01) , pages 263-277, XP002522218, ISSN: 1743-8225, DOI: 10.1504/IJAHUC.2007.014070 * abstract * * 1. Introduction 2. Design principles * | 1-10 | |

The present search report has been drawn up for all claims

| Place of search | Date of completion of the search | Examiner |
|---|---|---|
| Munich | 18 August 2015 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**    EP 15 00 1190

This annex lists the patent family members relating to the patent documents cited in the above-mentioned European search report.
The members are as contained in the European Patent Office EDP file on
The European Patent Office is in no way liable for these particulars which are merely given for the purpose of information.

18-08-2015

| Patent document cited in search report | | Publication date | Patent family member(s) | | Publication date |
|---|---|---|---|---|---|
| US 2012290389 | A1 | 15-11-2012 | NONE | | |
| WO 2014055376 | A2 | 10-04-2014 | AU | 2013327599 A1 | 07-05-2015 |
| | | | CA | 2887283 A1 | 10-04-2014 |
| | | | EP | 2904565 A2 | 12-08-2015 |
| | | | PH | 12015500750 A1 | 25-05-2015 |
| | | | US | 2014171039 A1 | 19-06-2014 |
| | | | WO | 2014055376 A2 | 10-04-2014 |
| US 2013246150 | A1 | 19-09-2013 | AU | 2013231899 A1 | 11-09-2014 |
| | | | US | 2013246150 A1 | 19-09-2013 |
| | | | US | 2013282586 A1 | 24-10-2013 |
| | | | WO | 2013138756 A1 | 19-09-2013 |

EPO FORM P0459